# DEMANDE DE BREVET EUROPEEN

(11) **EP 0 673 997 A1**
(43) Date de publication de la demande: **27.09.1995**
(21) Numéro de dépôt: 95400658.1
(22) Date de dépôt: 24.03.1995
(51) Int. Cl.: C12C 7/00, C12C 7/16

(54) **Procédé et installation de brassage de bière**

(30) Priorité: 25.03.1994 FR 9403534
(71) Demandeur: Claulin, Guy, F-75007 Paris (FR)
(72) Inventeur: Claulin, Guy, F-75007 Paris (FR)
(74) Mandataire: Tanguy, Gilbert André

(57) **Abrégé**

Brassage de bière regroupant plusieurs opérations dans une même cuve. Selon l'invention, la cuve (11) est équipée d'un tamis (25) mobile verticalement, de moyens de chauffage (18) de moyens de refroidissement (19) et d'un moyen de soutirage (20).

## Description

L'invention concerne un procédé de brassage de bière remarquable en ce qu'il permet d'effectuer plusieurs opérations dans une même unité de traitement et par conséquent de réduire substantiellement le coût et l'encombrement d'une installation de brassage conforme à son principe. L'invention concerne aussi une installation de brassage de bière, notamment agencée pour la mise en oeuvre du procédé.

Traditionnellement, les principales opérations permettant d'élaborer une bière sont :
- I'empâtage qui peut se définir comme une infusion de "malt" (orge) dans de l'eau portée à une température moyenne s'élevant par paliers jusqu'à 78 à 80°, les paliers s'échelonnant pendant une période d'une heure à une heure et demie ;
- un filtrage permettant de séparer les résidus de malt, appelés drêches, d'une fraction plus liquide. Ce filtrage s'effectue "sur drêches" dans ce sens que le liquide recueilli est amené à traverser un lit de drêches (devenant de plus en plus épais) globalement poreux en raison de la présence des balles d'orge au sein de la masse des résidus ;
- une cuisson de ladite fraction liquide (pendant une heure à une heure et demie) en présence de houblon et éventuellement d'autres composés aromatiques et/ou amérisants ;
- une opération d'élimination de résidus plus légers appelés dans la suite de la description "moût albumineux". Cette opération consiste traditionnellement en un traitement de centrifugation à chaud de la fraction liquide après cuisson, aboutissant à la formation d'un noyau relativement compact du moût, susceptible d'être facilement retiré du liquide ;
- un refroidissement du liquide, par paliers, opéré généralement en faisant transiter le liquide dans des échangeurs de chaleur pour l'amener à des températures de plus en plus basses. En général, au moins deux échangeurs en cascade sont nécessaires, l'un fonctionnant avec de l'eau froide à température ambiante et l'autre avec de l'eau glacée ;
- d'autres phases importantes sont encore successivement mises en oeuvre, principalement une fermentation en présence de levures appropriées, le soutirage des levures et enfin une maturation ou fermentation résiduelle. Ces dernières opérations, dont les modalités varient en fonction du type de bière recherché et du savoir-faire des brasseurs, ne sont pas concernées par l'invention qui sera décrite plus loin.

Cependant, dans les installations traditionnelles, le passage d'une opération à l'autre s'effectue toujours par un transfert de la masse liquide d'une unité à une autre, chaque unité étant équipée pour effectuer un traitement particulier. De ce fait, les installations industrielles connues sont encombrantes et coûteuses.

L'invention vise à réduire le coût et l'encombrement d'une installation de brassage de bière, en modifiant certaines des opérations mentionnées ci-dessus, de façon qu'elles puissent se succéder sans transfert de la masse liquide.

A cet effet, l'invention concerne en premier lieu un procédé de brassage de bière incluant notamment, avant fermentation, une suite de quatre opérations, dites d'empâtage, de filtrage sur drêches, de cuisson et d'élimination de moût albumineux, caractérisé en ce qu'on exécute plusieurs de ces opérations dans une même cuve munie d'un tamis mobile verticalement, en ce que ledit filtrage sur drêches consiste essentiellement à relever lentement ledit tamis au travers du mélange résultant dudit empâtage et en ce que, après cuisson, on procède à ladite élimination de moût albumineux par soutirage de la fraction liquide du mélange filtré sur drêches au travers d'un filtre retenant ledit moût.

Dans un mode d'exécution avantageux du procédé défini ci-dessus, les quatre opérations précitées sont exécutées dans la même cuve en maintenant le tamis au fond de la cuve pendant l'opération d'empâtage de façon à pouvoir le remonter lentement dans la cuve, pour effectuer ledit filtrage sur drêches.

Selon une autre caractéristique avantageuse de l'invention, on élimine les drêches accumulées sur le tamis et on réintroduit ce tamis au fond de la cuve en vue de son réemploi, après cuisson, pour retenir au moins une partie du moût albumineux précité, lors du soutirage de la fraction liquide, s'opérant alors au travers dudit tamis.

On notera particulièrement que l'élimination du moût albumineux ne se fait plus par centrifugation mais par un second filtrage, plus simple à mettre en oeuvre, intervenant pendant le soutirage final de la fraction liquide, ce qui élimine un équipement particulièrement coûteux.

On peut ainsi réaliser une installation de brassage de bière économique et très peu volumineuse, susceptible de prendre place dans un débit de boissons ou un restaurant, voire chez un particulier désirant fabriquer sa propre bière.

Bien entendu, l'invention concerne aussi une installation de brassage de bière du type comportant notamment des moyens d'empâtage, des moyens de filtrage sur drêches, des moyens de cuisson et des moyens d'élimination de moût albumineux, caractérisée en ce qu'elle comporte une cuve munie d'un tamis mobile verticalement, de surface correspondant à une section transversale de ladite cuve et en ce que ce tamis est lié à un système d'entraînement agencé pour déplacer verticalement ledit tamis dans ladite cuve.

Pour mettre en oeuvre les opérations précitées, cette cuve sera avantageusement équipée de moyens de chauffage et de moyens de refroidissement. Elle comportera aussi un moyen de soutirage à sa partie inférieure pour prélever le liquide et le transférer vers une cuve de fermentation.

L'invention sera mieux comprise et d'autres avantages de celle-ci apparaîtront plus clairement à la lumière de la description qui va suivre illustrant une partie d'une installation de brassage de bière conforme à son principe et montrant également le déroulement des différentes étapes mises en oeuvre dans une même cuve, donnée uniquement à titre d'exemple et faite en référence aux dessins annexés dans lesquels :
- la figure 1 est une vue schématique en élévation et en coupe d'une cuve conforme à l'invention, représentée pendant l'opération d'empâtage ;
- la figure 2 est une vue analogue à la figure 1 où la cuve est représentée pendant l'opération de filtrage sur drêches ;
- la figure 3 est une vue analogue à la figure 1 où la cuve est représentée au moment de l'élimination des drêches ;
- la figure 4 est une vue analogue à la figure 1 où la cuve est représentée pendant l'opération de cuisson ;
- la figure 5 est une vue analogue à la figure 1 où la cuve est représentée pendant l'opération de refroidissement ; et
- la figure 6 est une vue analogue à la figure 1 où la cuve est représentée pendant l'opération de soutirage et de filtrage du moût albumineux.

Sur les dessins, on a représenté la partie d'une installation de brassage de bière qui est concernée par l'invention et qui est essentiellement constituée d'une cuve 11, cylindrique, surmontée d'un couvercle 12 pivotant servant de support à un motoréducteur 13 dont l'arbre moteur 14 est placé suivant l'axe principal de la cuve cylindrique 11. Cet arbre est lié à un élément d'entraînement 16 coudé susceptible d'être en prise avec une manivelle de transmission qui sera décrite plus loin. Le corps de la cuve est installé dans un châssis qui renferme des moyens de chauffage 18, des moyens de refroidissement 19 et un moyen de soutirage 20 installé à sa partie inférieure. Dans l'exemple, les moyens de chauffage sont constitués par une résistance électrique 21 en contact thermique avec le fond de la cuve et isolée thermiquement du reste du bâti par une plaque d'amiante 22. Les moyens de refroidissement 19 sont ici représentés sous forme d'un serpentin d'échange thermique entourant la partie cylindrique de la cuve et à l'intérieur duquel on peut faire circuler un liquide de refroidissement, typiquement de l'eau froide. Le moyen de soutirage 20 est ici représenté par un simple robinet branché au fond de la cuve et permettant d'en extraire le liquide à la fin du traitement effectué dans cette cuve.

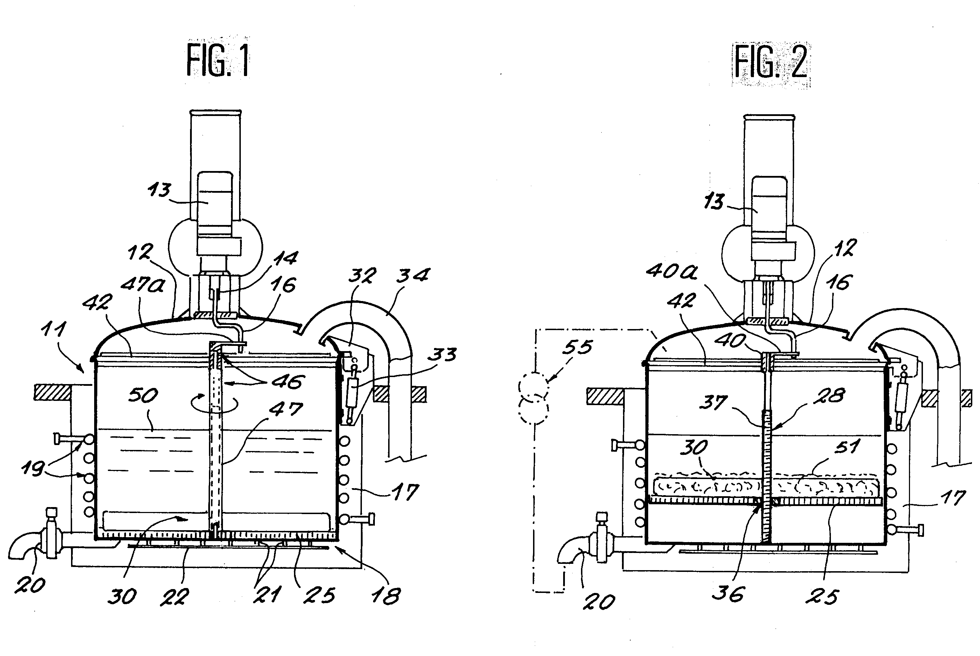

La cuve 11 est conçue pour réaliser successivement l'empâtage, le filtrage sur drêches, la cuisson et l'élimination du moût albumineux, selon ce qui a été indiqué plus haut. Pour ce faire, elle comporte un tamis 25 mobile verticalement, de surface correspondant à une section transversale horizontale de la cuve. Ce tamis a donc un contour circulaire de diamètre correspondant au diamètre intérieur de la cuve. Un système d'entraînement 28 (voir figure 2) est agencé pour déplacer verticalement le tamis dans la cuve. En outre, pour la plupart des opérations, excepté le filtrage sur drêches, un agitateur 30 est mis en oeuvre. Cet agitateur est muni de pâles s'étendant dans la cuve 11 au-dessus du tamis.

Le couvercle 12 est articulé au bord supérieur de la cuve par une charnière 32. Son mouvement est assisté par des ressorts à gaz 33. Un tube coudé 34 est connecté au couvercle, pour l'évacuation de la condensation.

Le tamis 25 comporte en son centre un écrou 36 engagé sur une tige filetée 37, verticale, entraînée en rotation axialement (le tamis étant bien entendu immobilisé en rotation dans la cuve mais mobile en translation verticale). L'extrémité supérieure de cette tige filetée 37 est liée à un premier organe de couplage amovible 40 (figure 2) muni d'une manivelle de transmission 40a précitée venant au contact de l'extrémité de l'élément d'entraînement coudé 16 lié à l'arbre du motoréducteur 13. L'organe de couplage amovible 40 est installé en rotation dans un support de centrage 42, situé à la partie supérieure de la cuve 11, au niveau du joint du couvercle. Ce support de centrage maintient ainsi la tige filetée 37 en position verticale, par l'intermédiaire de la manivelle de transmission 40.

Dans les autres cas, (notamment comme illustré à la figure 1 qui représente l'empâtage), le motoréducteur 13 entraîne l'agitateur 30 en rotation par l'intermédiaire d'un second organe de couplage amovible 46 constitué par un arbre tubulaire 47 susceptible de venir entourer coaxialement la tige filetée et dont l'extrémité supérieure qui vient prendre place dans le support de centrage 42 est munie d'une manivelle de transmission 47a semblable à la manivelle 40a et par conséquent susceptible d'être entraînée en rotation par le même élément d'entraînement 16. L'extrémité inférieure de l'arbre tubulaire 47 est conformée pour pouvoir être accouplé en rotation avec le centre de l'agitateur 30, grâce à des liaisons de forme appropriées. Ainsi, selon les phases successives du procédé mis en oeuvre dans la cuve, l'un des organes de couplage peut être substitué à l'autre et réciproquement, pour coupler sélectivement le moteur électrique soit à la tige filetée 37 entraînant la remontée lente du tamis 25 dans la cuve, soit audit agitateur 30, lorsque l'arbre tubulaire 47 vient se raccorder par son extrémité inférieure à la partie centrale de l'agitateur.

On va maintenant décrire en référence aux figures 1 à 6, les différentes étapes du procédé de brassage de bière mises en oeuvre dans la cuve 11 qui vient d'être décrite.

L'empâtage décrit à la figure 1 consiste en une infusion de malt (orge broyée) dans de l'eau, constituant un mélange 50 mis en mouvement par l'agitateur 30. Pendant cette phase du procédé, le motoréducteur 13 entraîne donc l'agitateur par l'intermédiaire dudit second organe de couplage 46 entourant la tige filetée 37, laquelle ne peut être entraînée en rotation. Par conséquent, le tamis 25 reste au fond de la cuve pendant cette opération, les moyens de chauffage 18 sont mis en oeuvre de façon que l'infusion se déroule à une température choisie et contrôlée par paliers.

A la fin de l'empâtage, on met en oeuvre le filtrage sur drêches. Dans ce cas, ledit second organe de couplage 46 (l'arbre tubulaire et la manivelle de transmission) est enlevé de la cuve et remplacé par ledit premier organe de couplage 40 qui vient s'adapter à l'extrémité supérieure de la tige filetée 37. Par conséquent, l'agitateur 30 cesse d'être entraîné en rotation et repose simplement sur le tamis 25 lequel, commence à remonter lentement, verticalement, dans la cuve 11 en traversant le produit résultant de l'empâtage. Il en résulte une accumulation des drêches 51 sur le tamis de sorte que ce filtrage se fait progressivement au travers d'une couche de plus en plus épaisse de drêches.

Il est à noter qu'il peut être nécessaire de recycler au moins une partie de la fraction liquide du mélange filtré sur drêches au dessus du tamis 25, au cours de l'opération de filtrage sur drêches. Ce recyclage peut notamment être recommandé tant que le lit de drêches n'a pas atteint une certaine épaisseur. Le recyclage est symbolisé sur la figure 2 par un circuit de pompage 55 représenté en traits fantômes entre le moyen de soutirage 20 et la partie supérieure de la cuve.

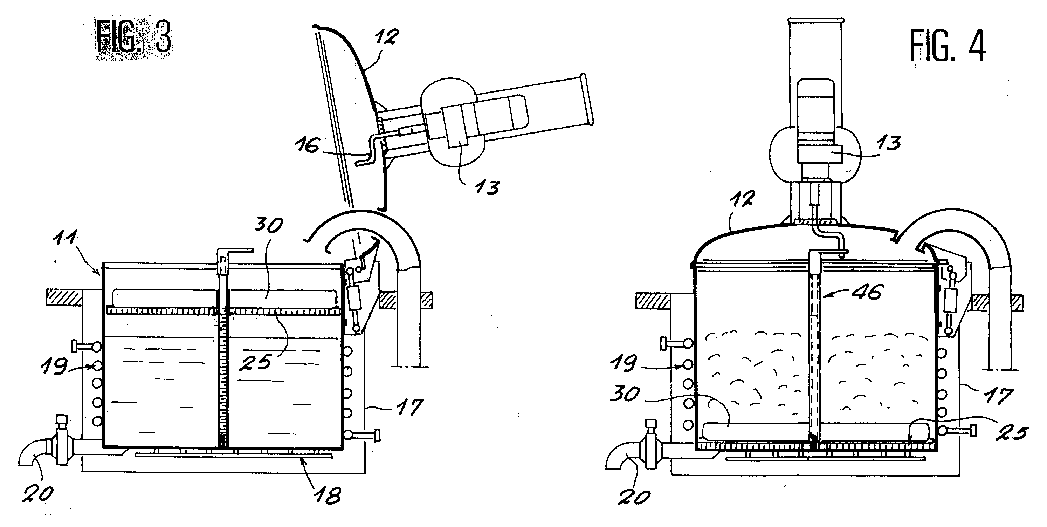

Lorsque le tamis est parvenu à la partie supérieure de la cuve, on procède à un rinçage puis à une évacuation des drêches. On nettoie le tamis 25. C'est la situation illustrée à la figure 3, qui nécessite d'ouvrir le couvercle. Ensuite, on remplace ledit premier organe de couplage 40 par le second organe de couplage 46 après avoir remis le tamis et l'agitateur au fond de la cuve. On introduit du houblon et éventuellement d'autres constituants dans la cuve et on referme le couvercle pour procéder à la cuisson comme illustré à la figure 4. Pendant cette cuisson, c'est l'agitateur 30 qui à nouveau est entraîné par le motoréducteur. Cependant, il est à noter que le tamis 25 est déjà interposé entre la masse liquide en ébullition et le moyen de soutirage 20.

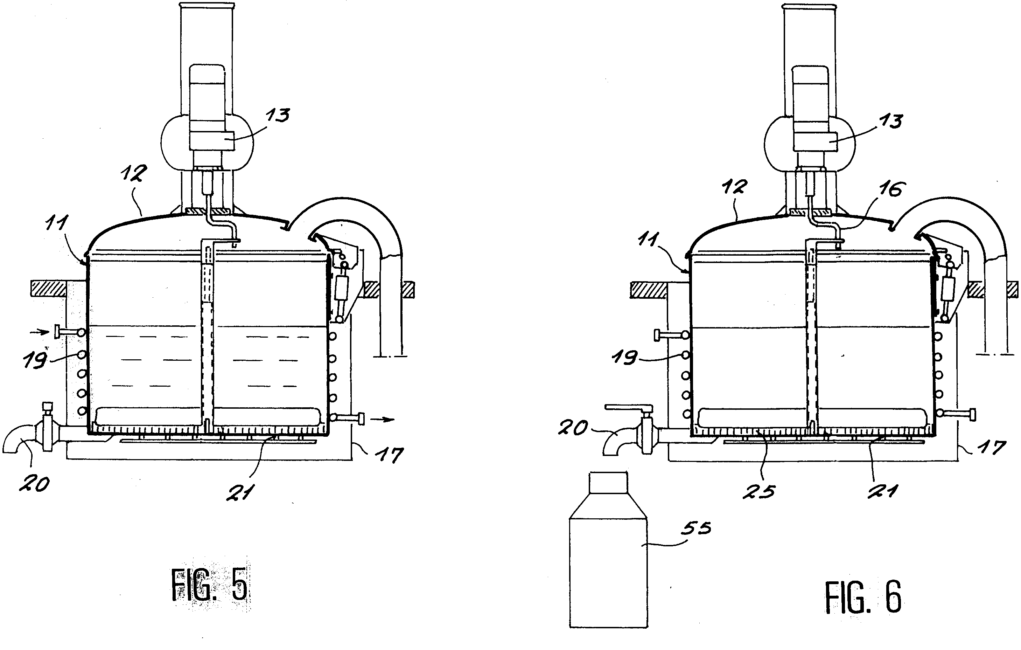

A la fin de l'opération de cuisson, on procède à un refroidissement par paliers contrôlés, en faisant passer de l'eau froide dans l'échangeur 19, la résistance électrique 21 étant bien sûr déconnectée. C'est la situation illustrée à la figure 5. A la fin du refroidissement, le liquide est soutiré de la cuve 11 dans un conteneur de transfert 55 ou à l'aide d'une pompe vers les containers de fermentation (figure 6) mais ce faisant, il traverse une nouvelle fois le tamis 25 qui retient au moins une partie notable du moût albumineux qui s'est formé pendant les opérations précédentes, notamment la cuisson.

Le produit liquide ainsi recueilli dans le conteneur de transfert 55 est apte à subir une fermentation et d'autres opérations classiques qui ne font pas partie de l'invention.

## Revendications

**1. -** Procédé de brassage de bière incluant notamment, avant fermentation, une suite de quatre opérations, dites d'empâtage, de filtrage sur drêches, de cuisson et d'élimination de moût albumineux, caractérisé en ce qu'on exécute plusieurs de ces opérations dans une même cuve (11) munie d'un tamis (25) mobile verticalement, en ce que ledit filtrage sur drêches consiste essentiellement à relever lentement ledit tamis au travers du mélange résultant dudit empâtage et en ce que, après cuisson, on procède à ladite élimination de moût albumineuxpar soutirage (20) de la fraction liquide du mélange filtré sur drêches au travers d'un filtre retenant ledit moût.

**2. -** Procédé selon la revendication 1, caractérisé en ce qu'on exécute les quatre opérations précitées dans ladite cuve (11) en maintenant ledit tamis (25) au fond de ladite cuve pendant ladite opération empâtage.

**3. -** Procédé selon la revendication 1 ou 2, caractérisé en ce qu'on recycle (55) au moins une partie de la fraction liquide du mélange filtré sur drêches au-dessus dudit tamis, au cours de ladite opération de filtrage sur drêches.

**4. -** Procédé selon l'une des revendications précédentes, caractérisé en ce qu'on élimine lesdites drêches accumulées sur ledit tamis et en ce que l'on réintroduit ce tamis (25) au fond de ladite cuve en vue de son réemploi après cuisson, pour retenir au moins une partie dudit moût albumineux pendant ledit soutirage (20) de ladite fraction liquide (figure 6).

**5. -** Procédé selon l'une des revendications précédentes, caractérisé en ce qu'on refroidit ladite fraction liquide avant ledit soutirage (figure 5).

**6. -** Installation de brassage de bière du type comportant notamment des moyens empâtage, des moyens de filtrage sur drêches, des moyens de cuisson et des moyens d'élimination de moût albumineux, caractérisée en ce qu'elle comporte une cuve (11) munie d'un tamis (25) mobile verticalement, de surface correspondant à une section transversale de ladite cuve et en ce que ce tamis est lié à un système d'entraînement (28) agencé pour déplacer verticalement ledit tamis dans ladite cuve.

**7. -** Installation selon la revendication 6, caractérisée en ce que ladite cuve comporte des moyens de chauffage (18).

**8. -** Installation selon la revendication 6 ou 7, caractérisée en ce que ladite cuve comporte des moyens de refroidissement (19).

**9. -** Installation selon l'une des revendications 6 à 8, caractérisée en ce qu'elle comporte un moyen de soutirage (20) à sa partie inférieure.

**10. -** Installation selon l'une des revendications 6 à 9, caractérisée en ce que ledit tamis est entraîné par une tige filetée (37), verticale, dont une extrémité supérieure est liée à un premier organe de couplage amovible (40) muni d'une manivelle de transmission (40a), susceptible d'être couplée à un moteur électrique, de préférence un moto-réducteur (13).

**11. -** Installation selon la revendication 10, caractérisée en ce qu'elle comporte un agitateur (30) s'étendant dans ladite cuve au-dessus dudit tamis (25) et raccordé à un second organe de couplage amovible (46) comportant un arbre tubulaire (47) susceptible de venir entourer coaxialement ladite tige filetée et en ce que l'extrémité supérieure de cet arbre est munie d'une manivelle de transmission ou analogue (47a) susceptible d'être couplée audit moteur électrique, ledit second organe de couplage pouvant ainsi être substitué audit premier organe de couplage et réciproquement, pour coupler sélectivement ledit moteur électrique soit au système d'entraînement dudit tamis, soit audit agitateur.
